# EUROPÄISCHE PATENTSCHRIFT

(11) **EP 1 864 153 B1**
(45) Veröffentlichungstag und Bekanntmachung des Hinweises auf die Patenterteilung: **29.10.2014**
(21) Anmeldenummer: 06723719.8
(22) Anmeldetag: 20.03.2006
(51) Int. Cl.: G01S 5/16

(54) **OBJEKTVERFOLGUNGS- UND SITUATIONSANALYSESYSTEM**
OBJECT-TRACKING AND SITUATION-ANALYSIS SYSTEM
SYSTEME DE POURSUITE D'OBJET ET D'ANALYSE DE SITUATION

(30) Priorität: 18.03.2005 DE 102005013225
(43) Veröffentlichungstag der Anmeldung: 12.12.2007
(73) Patentinhaber: fluyds GmbH, 10829 Berlin (DE)
(72) Erfinder: FRANK, Margit, 10829 Berlin (DE); SCHNATMANN, Lars, Maria, 50823 Köln (DE)
(74) Vertreter: Eisenführ Speiser
(86) Internationale Anmeldenummer: PCT/EP2006/002740
(87) Internationale Veröffentlichungsnummer: WO 2006/097357

(56) Entgegenhaltungen:
- EP-A- 1 113 669
- WO-A-02/071334
- FR-A- 2 726 370
- GB-A- 2 387 052
- US-A- 5 363 297
- US-A1- 2003 179 294
- XU M ET AL: "Architecture and algorithms for tracking football players with multiple cameras" INTELLIGENT DISTRIBUTED SURVEILLANCE SYSTEMS, IEE, LONDON, GB, 23. Februar 2004 (2004-02-23), Seiten 51-55, XP002331014

## Beschreibung

Die Erfindung betrifft ein System zur Objektverfolgung- und Situationsanalyse für dynamische Vorgänge mit bewegten Objekten in einem begrenzten Raum, zum Beispiel zum Erfassen und Verfolgen von Spielern und Ball während eines Fußballspiels und zur Analyse verschiedener Spielsituationen wie sie z.B. aus WO 02/071334, FR 2 726 370, EP 1 113 669, US 2003/179294, US 5 363 297 oder aus XU M ET AL: "Architecture and algorithms for tracking football players with multiple cameras", INTELLIGENT DISTRIBUTED SURVEILLANCE SYSTEMS, IEE, LONDON, GB, 23. Februar 2004 (2004-02-23), Seiten 51-55, XP002331014 bekannt sind. Die bewegten Objekte sind dann Spieler und Ball. Der begrenzte Raum ist das Fußballfeld.

Die erfinderische Idee ist in keiner Weise nur auf die Erfassung von Fußballspielen auf einem Fußballfeld beschränkt. Sie kann auch Anwendung finden auf die Erfassung beliebiger Ballspiele oder sonstiger bewegter Vorgänge mit mehreren bewegten Objekten. Ebenso wenig kann die Erfassung in einem beliebigen beschränkten Raum stattfinden und ist somit nicht auf die Erfassung in einem Spielfeld beschränkt.

Das System arbeitet in Echtzeit, um fortlaufend Analyseergebnisse und graphische Darstellungen parallel zum Spielgeschehen zur Verfügung stellen zu können. Das Spielgeschehen wird dabei wenigstens 12 mal pro Sekunde, bevorzugt 25 mal pro Sekunde, erfasst und analysiert, so dass die Analyseergebnisse mit einer der Wahrnehmungsgeschwindigkeit des menschlichen Au-ges vergleichbaren Häufigkeit kontinuierlich aktualisiert werden. Die Analyseergebnisse stehen aufgrund der verteilten Implementierung des Systems mit einer geringen Latenz bereit, die in der Regel nicht größer ist als der zeitliche Abstand zwischen zwei aufeinanderfolgenden Erfassungszeitpunkten; sie kann jedoch auch größer sein als der zeitliche Abstand zwischen zwei aufeinanderfolgenden Erfassungs- und Analysezeitpunkten. Die Latenz ist bei bevorzugten Ausführungen für jeden Erfassungszeitpunkt konstant, in jedem Fall jedoch kleiner als ein festlegbares Maximum.

Das System umfasst eine oder mehrere Tracking-Units, die zur Erfassung von Objekten und zur Ermittlung der Raumkoordinaten der erfassten Objekte ausgebildet und mit einer zentralen Positionsdatenverarbeitungseinheit verbunden sind. Bei jeder der eingesetzten Tracking-Unit kann eines einer Auswahl von Messverfahren zur Bestimmung der Raumkoordinaten eingesetzt werden. So ist bei einer Ausführung einer Tracking-Unit vorgesehen, die zu erfassenden Objekte (Ball, Schiedsrichter, Spieler) mit Sensoren zu versehen, die eine Bestimmung des Aufenthaltsortes erlauben, indem sie selbst Signale aussenden oder auf ein ausgesandtes Messsignal entsprechend reagieren. Die Bestimmung selbst kann dann durch Sonarwellen oder elektromagnetische Signale z.B. auf der Grundlage der Laufzeitbestimmung oder des Doppler-Effektes erfolgen. Die Tracking-Unit selbst teilt sich dann ggf. in zwei oder mehr Untereinheiten auf, die an verschiedenen Positionen um und über das Spielfeld verteilt sind und die von den Sensoren ausgesandten Signale empfangen und auswerten.

Jede Tracking-Unit verfügt über wenigstens eine Objekterfassungseinheit. Verfügt eine Tracking-Unit über mehrere Untereinheiten, so verfügt bevorzugt jede Untereinheit über eine eigene Objekterfassungseinheit. In diesem Fall kann die Tracking-Unit über eine lokale Objekterfassungszentrale verfügen, die die von den Objekterfassungseinheiten der einzelnen Untereinheiten erstellten, ein erfasstes Objekt betreffenden Datensätze weiterverarbeitet und mit der zentralen Positionsdatenverarbeitungseinheit kommuniziert. Weist das Situationsanalysesystem nur eine Tracking-Unit auf, ist keine lokale Objekterfassungszentrale vorgesehen; in diesem Fall übernimmt die zentrale Positionsdatenverarbeitungseinheit die Aufgaben der lokalen Objekterfassungszentrale.

Die Objekterfassungseinheiten sind dazu ausgebildet, die bei der Erfassung der Objekte anfallenden Rohmessdaten einzelnen Objekten zuzuordnen. Innerhalb der Objekterfassungseinheiten erfolgt dabei noch keine Identifikation der einzelnen Objekte, sofern bei dem verwendeten Messverfahren aufgrund der Platzierung eines Sensors nicht von vornherein die Identität des jeweiligen Objektes feststeht. Das heißt, dass jede Tracking-Unit für sich genommen jedem von ihr erfassten Objekt eine lokale Identifikationskennung zuordnet, die sich von der von einer anderen Tracking-Unit des Erfassungssystems demselben Objekt zugeordneten Identifikationskennung unterscheiden kann. Sämtliche erfassten Datensätze werden über die gesamte Spieldauer in einer zentralen Systemdatenbank gespeichert, so dass sie auch für eine nachträgliche Rekonstruktion und Analyse aller Spielzüge zur Verfügung stehen. Die zentrale Systemdatenbank beinhaltet auch a-priori-Wissen z.B. das Gewicht oder die Größe von Spielern oder Spielerzuordnungen betreffend oder während der Erfassung eines anderen Spiels von dem Situationsanalysesystem erfasste Daten. Die Systemdatenbank ist somit eine spielübergreifende Datenbank, deren Inhalt während des Einsatzes des Systems fortlaufend weitergebildet und aktualisiert wird, indem die während des Betriebes gewonnenen Daten wie Angaben zu der Anzahl von Eckbällen, Torschüssen, angekommenen oder fehlgeleiteten Pässen, Fouls usw. in die Systemdatenbank zurückfließen. Zusätzlich kann der Datenbestand der Systemdatenbank auch außerhalb des Betriebes erweitert werden. So können beispielsweise die Spieler oder Vereine betreffende Informationen wie Mannschaftszugehörigkeit, Kurzbiographien der Spieler, Anzahl der Einsätze in der jeweiligen Nationalmannschaft, Gesundheitszustand und Einsatzbereitschaft, Spielsperren etc. in die Systemdatenbank übernommen werden.

Je nach verwendetem Messverfahren kann eine Tracking-Unit (durch ihre Objekterfassungseinheit) ein und demselben Objekt im Verlauf des Überwachungszeitraumes mehrere lokale Identifikationskennungen zuordnen. Dies passiert immer dann, wenn ein Objekt den von der jeweiligen Tracking-Unit erfassten Teil des Spielfeldes verlässt und wieder betritt, sofern das verwendete Messverfahren nicht automatisch eine Identifikation des erfassten Objektes durch den verwendeten Sensor ermöglicht. Während eines Erfassungszeitraumes (Spieldauer) wird von einer Tracking-Unit dieselbe Identifikationskennung kein zweites Mal vergeben.

Die Objekterfassungseinheit jeder Tracking-Unit ordnet jeweils einem zu einem Erfassungszeitpunkt tₙ₊₁ erfassten Objekt immer dann die Identifikationskennung eines zu dem letzten vor diesem Zeitpunkt liegenden Erfassungszeitpunkt tₙ erfassten Objektes (mutmaßlich desselben Objektes) zu, wenn der räumliche Abstand der Positionskoordinaten des zu den zwei Erfassungszeitpunkten erfassten Objektes einen bestimmten Schwellwert nicht überschreitet, sich das erfasste Objekt innerhalb der Zeitdifferenz zwischen den beiden Erfassungszeitpunkten also höchstens einen bestimmten Weg bewegt hat.

Der Schwellwert kann je nach Objektart vorgegeben werden (ein Ball wird sich gewöhnlich schneller bewegen als ein Spieler) und kann adaptiv durch einen Algorithmus während der Erfassung verändert werden. So kann der Schwellwert gesenkt werden, wenn das erfasste Objekt (ein Spieler) sich zuletzt langsam bzw. langsamer bewegt hat, und erhöht werden, wenn das erfasste Objekt zuletzt immer schneller wurde.

Der Abstand der Positionskoordinaten, der eine positive Zuordnung derselben lokalen Identifikationskennung zu einem zu zwei aufeinanderfolgenden Erfassungszeitpunkten erfassten Objekt zur Folge hatte, wird bevorzugt in dem die neue Position des erfassten Objektes bezeichnenden Datensatz vermerkt, bevorzugt als Vektor.

Schon bei der Zuordnung der lokalen Identifikationskennungen können nicht zum Spiel gehörige Objekte von der weiteren Verarbeitung ausgenommen werden, indem bestimmte Regeln für die Bewegungseigenschaften von Spielern und Ball überprüft werden. So kann ein totaler Stillstand eines erfassten Objektes keine Person oder ein im Spiel befindlicher Ball sein (zumindest, solange das Spiel nicht unterbrochen wurde). Ebenso kann ein sich mit hoher Geschwindigkeit bewegendes Objekt kein Spieler bzw. ein sich mit hoher Geschwindigkeit bewegendes Objekt, dessen Bewegung nicht den ballistischen Regeln für einen geschossenen oder geworfenen Ball folgt, überhaupt kein zum Spiel gehöriges Objekt sein.

Jede Tracking-Unit übermittelt die einer lokalen Identifikationskennung zugeordneten Raumkoordinaten - ggf. nach einer bereits erfolgten Projektion in ein globales Koordinatensystem - fortlaufend der zentralen Positionsdatenverarbeitungseinheit, die die von den verschiedenen Tracking-Units erhaltenen Datensätze jeweils den realen Objekten zuordnet. Da jede Tracking-Unit gewöhnlich nur einige der Objekte erfasst, manche Objekte aber zwangsläufig gleichzeitig von mehreren Tracking-Units erfasst werden, können zu jedem realen Objekt unterschiedlich viele Datensätze mit Raumkoordinaten vorliegen. Zudem kommt hinzu, dass die zentrale Positionsdatenverarbeitungseinheit dazu ausgebildet ist, solche Datensätze zu verwerfen, die keinem Objekt des Spieles zuzuordnen sind, sondern auf ein spielfremdes Objekt zurückgehen, das in den Erfassungsbereich einer Tracking-Unit geraten ist.

Eine besonders bevorzugte Form einer Tracking-Unit umfasst eine Kamera, die so gestaltet und angeordnet ist, dass sie wenigstens einen Teil des Spielfeldes erfasst. Kommen mehrere Tracking-Units dieser Art zum Einsatz, werden die Kameras vorteilhaft so angeordnet, dass sie zusammengenommen das gesamte Spielfeld aus verschiedenen Blickwinkeln erfassen.

Die Kameras enthalten jeweils ein Objektiv, einen Bilderfassungs-Sensor, beispielsweise einen CCD-Sensor oder einen CMOS-Sensor, eine Framegrabber-Einheit und eine Objekterkennungseinheit.

Die Objekterkennungseinheit jeder Kamera ist ausgebildet, auf an sich bekannte Weise in von dem Bilderfassungssensor erfassten und der Framegrabber-Einheit vorverarbeiteten Bildern einzelne Objekte beispielsweise mittels eines Keying-Verfahrens wie Chroma-Key, Differenz-Key, Luminanz-Key oder Kantendetektion zu isolieren.

Für jedes isolierte Objekt wird wenigstens ein die Position des Objektes in dem jeweiligen, erfassten, zweidimensionalen Bild kennzeichnender Positionsdatensatz erzeugt. Alle Koordinaten, d.h. alle Positionsdatensätze, der von einer Kamera isolierten Objekte stehen an einem Datenausgang der jeweiligen Kamera zur Weitergabe an eine zentrale Positionsdatenverarbeitungseinheit bereit. Jedem einem jeweiligen Objekt zugeordneten Positionsdatensatz kann in einer Ausführungsvariante der Erfindung eine Identifikationskennung zugeordnet sein.

Die Objekterkennungseinheit kann auch derart ausgebildet sein, dass keine Identifikationskennung generiert wird und der jedem isolierten Objekt für den Zeitpunkt der Bildaufnahme zugeordnete Positionsdatensatz keine Identifikationskennung enthält. In diesem Fall wird eine Identifikationskennung automatisch in der Positionsdatenverarbeitungseinheit erzeugt.

Die Kamera jeder kamerabasierten Tracking-Unit wird in einem zweistufigen Kalibrierungsverfahren kalibriert. Während der ersten Stufe werden die Abbildungseigenschaften jeder Kamera ermittelt und ein erster Kalibrationsdatensatz erstellt, der eine rechnerische Reduktion der durch die Abbildungseigenschaften der Kamera erzeugten Fehler bei der Positionserfassung erlaubt. In diesem Schritt der Objektivkalibrierung wird ein ebener Eichkörper in das Erfassungsfeld der Kamera gebracht. Bevorzugt wird ein rechteckiger Eichkörper verwendet. Der Eichkörper ist auf seiner Oberfläche mit einem gegenüber Helligkeit oder Farbe des Eichkörpers optisch kontrastierend abgesetzten Gitternetz versehen, dessen Gitterwaben bevorzugt quadratisch, wenigstens jedoch rechtwinklig, ausgeführt sind und deren Kantenlängen bekannt sind. Anstelle eines Gitternetzes kann auch ein Eichkörper mit einem schachbrettartigen Farbmuster verwendet werden.

Indem der Eichkörper in verschiedenen Positionen gegenüber der Kamera positioniert und aufgenommen wird, stehen anhand der Kantenverläufe und der Kreuzungspunkte des Gitternetzes geometrische Kalibrationsdaten bereit, die die Berechnung der Abbildungsverzerrung der Kamera erlauben, weil die wirkliche Geometrie des Eichkörpers wohlbekannt ist. Auf diese Weise werden die folgenden Kamera- und Objektparameter kalibriert:
- Öffnungswinkel bzw. Bildweite
- horizontaler Skalierungsfaktor
- Bildmittelpunkt (Versatz optische Achse - CCD-Mittelpunkt)
- radiale Verzeichnung

Während der zweiten Stufe des Kalibrierungsverfahrens wird die Lagekalibrierung der Sensorkameras vorgenommen. Hierzu werden die Kameras auf die Position gebracht, die sie während der Erfassung eines zu erfassenden Fußballspiels einnehmen sollen. Die Positionen sind so zu wählen, dass jeder Punkt des Spielfeldes von wenigstens zwei Kameras erfasst wird, deren optische Achsen möglichst einen Winkel zwischen 45° und 135° bilden.

Zur Kalibrierung wird nun wenigstens ein gegenüber dem Spielfeld kontrastierender Eichkörper auf das Spielfeld gebracht. Der Eichkörper ist möglichst kugelförmig, so dass sein von einer beliebigen Position aus erfasster Umriss stets kreis- oder ellipsenförmig ist. Die Größe des Eichkörpers ist so zu wählen, dass der Eichkörper in der Abbildung durch jede Messkamera wenigstens eine Vielzahl von Bildpunkten einnimmt, die bevorzugt in der Größenordnung zwischen zehn und hundert Bildpunkten liegen soll. Die Größe des Eichkörpers ist demzufolge auch von der Auflösung der Messkameras abhängig. Bevorzugt ist die Auflösung der Messkameras so zu wählen, dass ein Eichkörper mit einer der gegebenen Regel entsprechenden Größe kleiner als ein Fußball ist, um eine Kalibrierung zu erlauben, die genau genug ist, die Position eines realen Objektes bis auf eine Strecke, die kleiner als der Durchmesser eines Fußballs ist, genau zu bestimmen.

Der Eichkörper wird an verschiedenen Positionen des Spielfeldes positioniert und von den Messkameras erfasst. Auf diese Weise ist eine Bestimmung der relativen Lage der Messkameras zueinander möglich. Wird der Eichkörper an verschiedenen bekannten Positionen des Spielfeldes positioniert (z.B. am Anstoßpunkt, an den Elfmeterpunkten, Eckpunkten und den Schnittpunkten der Spielfeldmarkierung), ist auch eine Bestimmung der absoluten Position der Messkameras in einem globalen Koordinatensystem möglich, wodurch die Kalibrierung abgeschlossen wird.

Jede Tracking-Unit verfügt über eine Datenübertragungseinheit, über die sie mit der zentralen Positionsdatenverarbeitungseinheit verbunden werden kann. Vorzugsweise ist die Datenübertragungseinheit dazu ausgebildet, eine bidirektionale Kommunikation zu erlauben, so dass sowohl jede Tracking-Unit an die zentrale Positionsdatenverarbeitungseinheit und die zentrale Positionsdatenverarbeitungseinheit über einen Rückkanal an jede Tracking-Unit einzeln oder mehrere Tracking-Units gleichzeitig Daten übertragen kann.

Um die Anforderungen an die Rechenkapazität der zentralen Positionsdatenverarbeitungseinheit gering zu halten, kann die Objekterkennungseinheit jeder Kamera einer kamerabasierten Tracking-Unit bereits Verarbeitungsschritte für die von ihr gewonnenen Bilddaten vornehmen und lediglich die Ergebnisse an die zentrale Positionsdatenverarbeitungseinheit übermitteln. Alternativ kann jede Kamera auch rohe Bilddaten neben den Ergebnissen bereits durchgeführter Verarbeitungsschritte übermitteln, anhand derer die zentrale Positionsdatenverarbeitungseinheit zusätzliche Verarbeitungsschritte vornehmen kann.

Der Rückkanal erlaubt eine Steuerung des Erfassungsverhaltens der Tracking-Units. So kann eine Tracking-Unit angewiesen werden, ein Objekt mit einer bestimmten lokalen Identifikationskennung nicht mehr weiterzuverfolgen, da in der zentralen Positionsdatenverarbeitung erkannt wurde, dass es sich um kein zum Spiel gehöriges Objekt handelt oder weil zu demselben realen Objekt eine andere Tracking-Unit momentan aufgrund einer besseren Positionierung exaktere Messdaten liefert. Auch ist vorgesehen, bei kamerabasierten Tracking-Units die Parameter für die verschiedenen verwendeten Keying-Algorithmen über den Rückkanal über den Spielverlauf veränderlich vorzugeben. Dadurch kann eine Tracking-Unit oder eine Untereinheit einer Tracking-Unit z.B. angewiesen werden, bevorzugt Bildobjekte einer bestimmten Farbe, Helligkeit etc. zu isolieren und zu diesen Bildobjekten Positionsdatensätze zu erstellen oder ein bestimmtes Objekt mit der gleichzeitigen Anwendung einer bestimmten Kombination von Keying-Verfahren bildtechnisch zu isolieren, wobei auch die bei der Anwendung der Keying-Verfahren anzuwendenden Kriterien über den Rückkanal vorgegeben werden können. Die Kriterien können dabei automatisch oder durch einen die korrekte Funktionsweise des Systems überwachenden Operator gewählt und vorgegeben werden.

Das Analyse-Modul kann aufgrund erfasster Positionen und aus dem Vergleich von Positionen abgeleiteter Bewegungsrichtungen und -geschwindigkeiten anhand von Regeln, die Spielregeln und sonstige spielbezogenen Gesetzmäßigkeiten betreffen, besondere Spielsituationen antizipieren. Diese Regeln und Gesetzmäßigkeiten können in der mit dem Analyse-Modul verbundenen Systemdatenbank abgelegt sein. Solche Spielsituationen können spielspezifische Situationen wie Abseitsstellung, Foulspiel oder das Fallen eines Tores, oder auch aus Sicht des Erfassungsvorgangs besondere Spielsituation wie die Verdeckung zwei hintereinander vorbeilaufender Spieler etc. sein.

Sagt das Analyse-Modul eine solche besondere Spielsituation mit einer gegenüber einem wählbaren Schwellwert großen Wahrscheinlichkeit voraus, kann das Analyse-Modul bereits vor Entstehen der besonderen Spielsituation den Tracking-Units über den Rückkanal an die antizipierte Spielsituation angepasste Betriebsparameter vorgeben, so dass die Erfassung und Analyse mit einer erhöhten Genauigkeit oder größeren Erfolgssicherheit durchgeführt werden kann. Die auf diese Weise über den Rückkanal durch das Analyse-Modul automatisch vorgegebenen Betriebsparameter können je nach Ausführungsform der betroffenen Tracking-Unit beispielsweise Kriterien für die zu verwendenden Keying-Verfahren oder Position und Auflösung desjenigen Bildausschnittes sein, in dem das Entstehen der besonderen Spielsituation erwartet wird.

Grundsätzlich kann eine Kombination von Keying-Verfahren zur bildtechnischen Isolation eines Objektes verwandt werden. Die ein auf diese Weise erfasstes Objekt kennzeichnende Datenstruktur sieht entsprechend der Anzahl von verwendbaren oder verwendeten Keying-Verfahren viele Felder vor, in denen ein Wert gespeichert wird, der die Häufigkeit derjenigen Bildpunkte des Objektes angibt, die das für das jeweilige Keying-Verfahren vorgegebene Kriterium erfüllen. Die Datenstruktur sieht zudem noch Raum für Erweiterungen vor, die für die Ergebnisse anderer Bildverarbeitungsverfahren oder nichtbildbasierten Erfassungsverfahren vorgesehen sind.

Wann immer eine automatische Zuordnung der Datensätze zu einem realen Objekt, also die Erstellung einer globalen Objektkennung und eines globalen Objektdatensatzes und deren Zuordnung zu einem realen Objekt, nicht möglich ist, kann die Zuordnung durch einen Operator manuell vorgenommen werden. Die zentrale Positionsdatenverarbeitungseinheit ist dazu bevorzugt mit einer Benutzerschnittstelle mit einem Bildanzeigegerät verbunden und gibt bevorzugt bereits eine Auswahl von möglichen realen Objekten vor, die dem jeweiligen zweifelhaften Objekt zugeordnet werden könnten. Diese vorgegebene Auswahl beruht bevorzugt auf der bisherigen Zuordnung von realen und globalen Objekten, wie sie vor dem Zeitpunkt, ab dem die Zuordnung nicht mehr eindeutig automatisch vorgenommen werden konnte, bestand. Dabei wird bevorzugt berücksichtigt, dass nur solche Objekte, die vor der nicht mehr automatisch durchführbaren Zuordnung eine gewissen maximalen örtlichen Abstand zu dem oder den nicht zuordenbaren Objekten aufwiesen, für eine Zuordnung infragekommen. Nimmt der Operator eine Zuordnung vor, ist die zentrale Positionsdatenverarbeitungseinheit dazu ausgebildet, die für andere zweifelhafte Objekte für die Zuordnung zur Auswahl stehenden realen Objekte entsprechend anzupassen. Verbleibt für ein bestimmtes zweifelhaftes Objekt nur noch eine mögliche Objektzuordnung, nimmt die zentrale Positionsdatenverarbeitungseinheit die Zuordnung selbstätig vor.

Ein Beispielszenario für den erläuterten Fall sind zwei Spieler, die kollidieren, so dass eine bildtechnische Trennung im Moment der Kollision nicht mehr möglich ist. Nachdem sich die Spieler trennen, ist die automatische Zuordnung der nun wieder getrennt erfassten Bildobjekte, die jeweils einen der Spieler oder einen Teil von diesem repräsentieren, unter Umständen nicht mehr möglich, so dass die zentrale Positionsdatenverarbeitungseinheit für jeden Spieler die beiden Namen, Rückennummern oder sonstige Symbole der kollidierten Spieler als mögliche Objektzuordnung anzeigt. Wird für den ersten der beiden Spieler die Zuordnung manuell durchgeführt, ordnet die zentrale Positionsdatenverarbeitungseinheit dem anderen Spieler automatisch die verbleibende Objektkennung zu. Grundsätzlich kann die beschriebene Situation aber in den meisten Fällen z.B. durch Vorgabe bzw. automatische Wahl geeigneter Parameter (Kriterien) für ein Keying-Verfahren aufgelöst werden, so das z.B. die Farbe des Trikots der fraglichen Spieler als Beurteilungskriterium herangezogen wird.

Da sowohl bei der automatischen als auch der manuellen Zuordnung Fehler passieren können, geschieht die Zuordnung durch Erstellen von offiziellen Objektdatensätzen mit jeweils einer offiziellen Objektkennung. Die aufgrund der Zusammenführung der lokalen Objektdatensätze zu einem globalen Objekt erzeugten globalen Objektdatensätze bleiben grundsätzlich erhalten und werden in der Systemdatenbank gespeichert, so dass die aufgrund einer fehlerhaften Zuordnung der globalen Objektdatensätze zu realen Objekten generierten offiziellen Objektkennungen und -datensätze später durch korrigierte ersetzt werden können.

Besonders bevorzugt werden von den Kameras einer kamerabasierten Tracking-Unit Bilder in einer ersten, hohen Auflösung gewonnen und in Bilder einer zweiten, niedrigeren Auflösung konvertiert. Die Kameras verfügen dabei über einen Pufferspeicher, der fortlaufend eine durch die gewählte Größe des Speichers bestimmte Anzahl von zuletzt aufgenommenen Bildern in hoher Auflösung bereithält.

Die niedrigauflösenden Bilder werden fortlaufend an die zentrale Positionsdatenverarbeitungseinheit übertragen, gegebenenfalls neben Informationen zu bildtechnisch isolierten Objekten. Wann immer die zentrale Positionsdatenverarbeitungseinheit dabei die folgenden Verarbeitungsschritte nicht mit hinreichender Genauigkeit oder gar nur fehlerhaft ausführen kann, fordert sie von einer oder mehreren Kameras über den Rückkanal zu den Kameras die entsprechenden, im Pufferspeicher gespeicherten Bilder in der höheren Auflösung an, um den jeweiligen Verarbeitungsschritt mit den detailreicheren Bildern durchzuführen, was eine höhere Wahrscheinlichkeit einer erfolgreichen Durchführung des Verarbeitungsschrittes bewirkt. Die detailreicheren Bilder werden bevorzugt nicht durch eine Anpassung der Brennweite und damit der optischen Vergrößerung gewonnen, sondern basieren auf den ursprünglich in einer ersten höheren Auflösung erfassten Bildern. Für die Erfassung von antizipierten besonderen Spielsituationen können alternativ auch detailreichere Bilder benutzt werden, die durch eine vergrößerte optische Abbildung gewonnen wurden. Dazu werden dann bevorzugt zusätzliche Kameras mit einer höheren optischen Vergrößerung für die Erfassung herangezogen.

Die zentrale Positionsdatenverarbeitungseinheit kann über den Rückkanal entweder die vollständigen Bilder in der höheren Auflösung anfordern oder aber nur den oder diejenigen Ausschnitte des Bildes, innerhalb derer die durchzuführenden Verarbeitungsschritte nicht erfolgreich durchgeführt werden konnten.

Das System besteht somit aus drei klar voneinander abgegrenzten Komponenten, nämlich aus
einem Tracking-Modul
einem Analyse-Modul
einem Visualisierungs-Modul

Das Tracking-Modul umfasst wenigstens eine Tracking-Unit. Es werden kamerabasierte Tracking-Units bevorzugt; diese können neben sensorbasierten Tracking-Units zum Einsatz kommen. Ein besonders geeignetes Tracking-Modul verfügt über wenigstens zwei, vorzugsweise wenigstens vier Messkameras, die im folgenden wahlweise auch als (digitale) Tracking-Kameras (DTK) bezeichnet werden. Diese sind derart angeordnet und ausgerichtet, dass sie den begrenzten Raum und die darin befindlichen sich bewegenden und ortsfesten Objekte aus unterschiedlichen Perspektiven erfassen können. Die Messkameras besitzen jeweils ein Objektiv, einen Bildsensor, eine Framegrabbereinheit und eine Bildverarbeitungseinheit, die so angeordnet und ausgebildet sind, dass das Objektiv einer jeweiligen Messkamera ein zweidimensionales Abbild des erfassten Raumes und der Objekte auf den Bildsensor dieser Messkamera projiziert. Der Bildsensor ist seinerseits mit der Framegrabber-Einheit der Messkamera zur Vorverarbeitung des vom Bildsensor erfassten Bildes verbunden. Die Bildverarbeitungseinheit der Messkamera übernimmt Bilddaten von der Framegrabber-Einheit und ist ausgebildet, in dem jeweiligen zweidimensionalen Abbild einzelne Objekte und ihre Postionen innerhalb des zweidimensionalen Abbildes mittels eines Keying-Verfahrens zu erfassen und für jedes erfasste Objekt zur jeweiligen Zeit einen kameraspezifischen Positionsdatensatz zu erzeugen. Jeder Positionsdatensatz kann zusätzlich für jedes Objekt eine individuelle Objektkennung enthalten sowie die für dieses Objekt zum jeweiligen Zeitpunkt registrierten kameraspezifischen Positionsdaten.

Alternativ ist es auch möglich, die Positionsdaten der Objekte in Form von Positionsdatensätzen ohne Objektkennung an eine zentrale Positionsdatenverarbeitungseinheit weiterzugeben und in den Kameras keine individuellen Objektkennungen zu erzeugen.

Außerdem umfasst das Tracking-Modul eine zentrale Positionsdatenverarbeitungseinheit (im folgenden auch als Position Data Processor bezeichnet), die mit den Messkameras zur Übernahme der kameraspezifischen Positionsdatensätze verbunden und ausgebildet ist, die jeweiligen von den einzelnen Messkameras stammenden Objektkennungen einander so zuzuordnen, dass alle Objektkennungen zu jeweils einem realen Objekt einander zugeordnet sind. Außerdem ist die zentrale Positionsdatenverarbeitungseinheit dazu ausgebildet, aus den kameraspezifischen Positionsdaten der kameraspezifischen Positionsdatensätze zu einem jeweiligen realen Objekt eine globale Position des jeweiligen realen Objektes im erfassten Raum, bevorzugt per Triangulation, zu bestimmen und für jedes reale Objekt eine globale Objektkennung und einen zugehörigen zeitabhängigen globalen Positionsdatensatz zu erzeugen.

Die Triangulation beruht auf der geometrischen Positionserfassung eines Punktes oder Objektes von wenigstens zwei unterschiedlichen Standpunkten aus ohne eigene messtechnische Erfassung des Abstandes zum erfassten Punkt bzw. Objekt. Das im Stand der Technik wohlbekannte Verfahren beruht auf der Lösung eines linearen Gleichungssystems. Der erfasste Punkt im dreidimensionalen Raum liegt aufgrund der Erfassung von zwei unterschiedlichen Standpunkten aus jeweils als zweidimensionale Koordinaten in den beiden lokalen Koordinatensystemen der Standpunkte vor. Aufgrund der Kalibrierung der Messkameras ist es möglich, die zweidimensionalen Koordinaten in globale Koordinaten umzurechnen, was einer Koordinatentransformation von einem winkelbasierten zweidimensionalen Koordinatensystem in den R³ entspricht. Die zweidimensionalen Koordinaten repräsentieren dann für jeden Standpunkt jeweils eine Gerade, die durch den erfassten Punkt geht. Der Schnittpunkt der beiden Geraden liefert dann die dreidimensionalen Koordinaten des erfassten Punktes.

Alternativ ist es auch möglich, dass die Positionsdatenverarbeitungseinheit von den Tracking-Kameras Positionsdatensätze ohne jeweilige Objektkennung empfängt. Die für jedes Zeitfenster seitens der Tracking-Kameras gelieferten Positionsdatensätze enthalten dann nur Objektkoordinaten ohne eine Objektkennung, die diese Koordinaten einem Objekt zuordnet. De facto bedeutet dies, dass die Tracking-Kameras keinerlei Tracking-Funktion haben und die Zuordnung von seitens der Kameras in Form von Positionsdatensätzen gelieferten Koordinaten zu einzelnen Objekten wie beispielsweise individuellen Spielern oder einem Ball ausschließlich in der zentralen Positionsdatenverarbeitungseinheit erfolgt.

In dieser alternativen Ausführungsform der Objekterkennungseinheit muss der Position Data Processor bei der Zuordnung der kameraspezifischen Positionsdatensätze zur Berechnung einer globalen Position eines realen Objektes ohne kameraspezifische oder bereits globale Objektkennungen auskommen. Dazu kombiniert er alle möglichen Zuordnungen verschiedener Bildpunktkoordinaten aus jeweils einem kameraspezifischen Positionsdatensatz zur Berechnung der globalen Position eines realen Objektes. Genügt diese Position der geometrischen Bedingung, dass die Höhen-Koordinate der Position des Objektes im Weltkoordinatensystem derjenigen des Spielfeldes entspricht, so sind die einander entsprechenden Bildpunkte gefunden. Dieses automatische Bildpunkt-Matching wird solange wiederholt, bis für alle realen Objekte die entsprechenden Bildpunkt-Zuordnungen ermittelt und deren globale Positionen berechnet wurden. Globale Objektkennungen können jetzt den realen Objekten automatisch oder manuell (Operator) zugeordnet und zusammen mit den globalen Positionsdaten in einem zugehörigen, zeitabhängigen globalen Positionsdatensatz gespeichert werden.

Kriterien für das Tracking - also die Zuordnung eines Positionsdatensatzes für ein Zeitfenster zum entsprechenden, aber auf Grund von Spieler- oder Ballbewegung veränderten Positionsdatensatz eines nächsten Zeitfensters - sind:
- Spieler haben Fußpunktkoordinaten (Z-Koordinaten), die dem Boden des Fußballfeldes entsprechen
- Objekte können sich aufgrund ihrer Maximalgeschwindigkeit innerhalb eines Zeitfensters nur begrenzt weit bewegen

Aus diesen Kriterien sind Trackingregeln abgeleitet. Die zentrale Positionsdatenverarbeitungseinheit ist ausgebildet, die Positionsdatensätze auf Basis dieser Regeln von Zeitfenster zu Zeitfenster jeweils einzelnen Objekten zuzuordnen und auf diese Weise das Tracking zu bewirken.

Die von den Tracking-Kameras für ein jeweiliges Objekt ermittelten Positionsdaten können die Koordinaten eines jeweiligen Flächenschwerpunktes oder -fußpunktes eines per Keying isolierten (zweidimensionalen) Objektes in der jeweiligen (virtuellen) Kamerabildebene sein.

Durch das computergestützte Kombinieren aller noch anonyme Spieler repräsentierenden Bildobjekte - vorzugsweise dargestellt durch ihre Fusspunkte - können durch Triangulation diejenigen Objekte aus verschiedenen Kamerabildern einander zugeordnet werden, für die sich die z-Koordinate des Spielfeldes ergibt. Somit ist bekannt, welche kameraspezifischen Bildobjekte einander entsprechen. Anhand eines Video-Kontrollbildes kann der Tracking-Operator dem so erfolgreich getrackten Objekt eine Identifizierung (globale ID) zuordnen.

Dabei ist das Tracking-Modul, insbesondere die zentrale Positionsdatenverarbeitungseinheit, ausgebildet, wenigstens zwei, vorzugsweise drei verschiedene Arten von Objekten zu unterscheiden. Diese unterschiedlichen Objekte sind zum einen bewegte Objekte, die sich in aktive selbstbewegende Objekte (z.B. Fussballspieler) und passive fremdbewegte Objekte (z.B. der Fußball) unterscheiden. Wahlweise erfasst das Tracking-Modul auch unbewegte, ortsfeste Objekte, z.B. das Fußballtor. Da letztgenannte Objekte jedoch ortsfest sind, kann deren Position und Objektkennung auch einfach in einer Datenbank entweder des Tracking-Moduls oder des Analyse-Moduls gespeichert sein.

Die kameraspezifischen Objektkennungen - falls solche erzeugt werden - und die globale Objektkennung für jedes Objekt - beispielsweise den Fußball oder einen bestimmten Spieler - können miteinander identisch sein oder sich voneinander unterscheiden. Im erstgenannten Fall sind die Objektkennungen für jedes virtuelle Abbild eines realen Objektes (Ball, Spieler, etc.) global identisch. Dies ist insbesondere dann der Fall, wenn gar keine kameraspezifischen Objektkennungen vergeben werden, sondern Objektkennungen als globale Objektkennungen erst in der zentralen Positionsdatenverarbeitungseinheit erzeugt werden.

Falls kameraspezifische Objektkennungen vergeben werden, kann die Zuordnung der kameraspezifischen lokalen Objektkennungen zu einer jeweiligen globalen Objektkennung einmalig zu Beginn eines Erfassungszeitraums, also z.B. zu Beginn eines Fußballspiels, erfolgen. Im Rahmen dieser Zuordnung und Identifikation können die globalen Objektkennungen auch manuell realen Objekten, also z.B. den einzelnen Spielern und dem Ball in einem Fußballspiel, zugeordnet werden.

Letzteres ist auch dann der Fall, wenn ausschließlich globale Objektkennungen zentral erzeugt werden. Die Zuordnung der globalen Objektkennungen zu realen Objekt erfolgt auch in diesem Fall mit manueller Unterstützung z.B. bei Spielbeginn oder nach Spielunterbrechungen. Von einer bekannten Ausgangssituation ausgehend kann dann das weitere Tracking auf Basis der vorgenannten Regeln weitestgehend automatisch erfolgen. Lediglich nach Objektverdeckungen kann auch während des Spielflusses eine manuelle Unterstützung der Zuordnung erforderlich sein.

Um ohne lokale Objektkennung auskommen zu können, also um auch Keying-Module ohne Objektkennungsvergabe in Systemen zur Positionsberechnung mittels Kameras detektierter Objekte einsetzen zu können, müssen somit die von allen Kameras an die zentrale Tracking-Einheit in Form von Bildkoordinaten übergebenen Bildpunkte einander zugeordnet werden. Dies kann in der zentralen Tracking-Unit unter Anwendung der vorgenannten Regeln automatisch geschehen, indem aus allen möglichen Zuordnungen diejenigen ausgewählt werden, die der geometrischen Bedingung genügen, dass die Höhen-Koordinate der Position des Objektes im Weltkoordinatensystem derjenigen des Spielfeldes entspricht. Dieser automatische Vorgang soll natürlich aus Performance-Gründen nur vor dem Beginn eines Fussballspiels zur Initialisierung des Tracking-Systems und bei erkannten "Störungen" des Tracking-Vorgangs (z. B. Spieler verdecken sich und entfernen sich wieder voneinander, Spielerauswechslung) zur Wiederherstellung der Bildpunkt-Zuordnung erfolgen. Die Identifizierung derart in ihrer Position im Weltkoordiinatensystem berechneter Objekte (globale Objektkennung) erfolgt durch den Operator immer kurz vor dem Spielbeginn oder bei Bedarf während des Spiels in den o. a. Störungssituationen.

Vorzugsweise umfasst das Situationsanalysesystem ein Visualisierungs-Modul, welches eine Visualisierungseinheit aufweist, die mit dem Analyse-Modul verbunden und ausgebildet ist, jederzeit auf die betreffenden Datenstrukturen zuzugreifen und aus diesen graphische, zeitabhängige und dynamische Repräsentationen der Objektpositionen und -konstellationen und zusätzlich ggf. auch Statistiken abzuleiten.

Das Visualisierungsmodul ist dabei dazu ausgebildet, eine optische Rekonstruktion des Spieles oder eines Teiles des Spieles zu erzeugen. Dabei kann ein beliebiger virtueller Standpunkt innerhalb des Spieles gewählt werden, so dass eine besonders interessante oder strittige Szene z.B. aus der Sicht des Schiedsrichters, eines Spieler oder von einer Position, für die keine ursprünglichen Bilddaten vorliegen, gezeigt werden kann.

Die Erfindung soll nun anhand eines Ausführungsbeispiels, nämlich eines Spielanalysesystems für ein Fußballspiel, näher erläutert werden.

Hierzu zeigen die Figuren:
- Figur 1:: einen ersten Überblick einer bevorzugten Ausführung des Tracking-Moduls
- Figur 2:: ein Blockdiagramm einer kamerabasierten Tracking-Unit
- Figur 3:: ein vereinfachtes Blockdiagramm einer digitalen Tracking-Kamera (DTK)

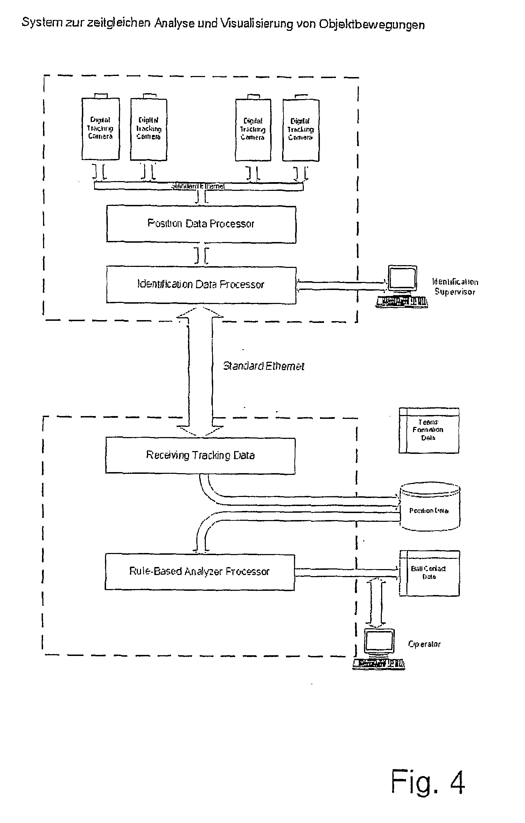

- Figur 4:: eine schematische Übersicht über Tracking-Modul und Analyse-Modul des beschriebenen Systems;

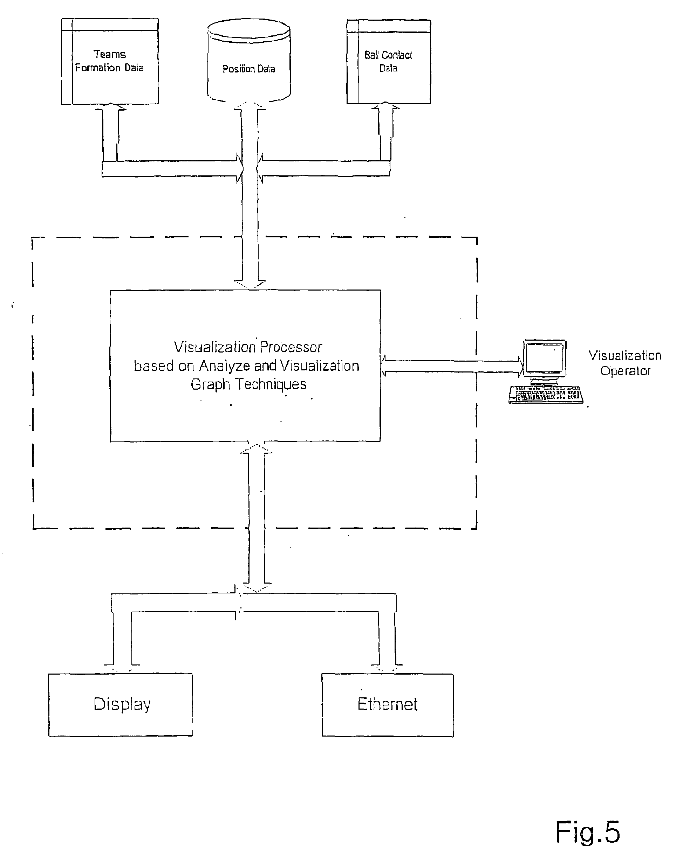

- Figur 5:: eine schematische Übersicht über ein Visualisierungsmodul des beschriebenen Systems, welches dem Analyse-Modul aus Figur 4 nachzuschalten ist;

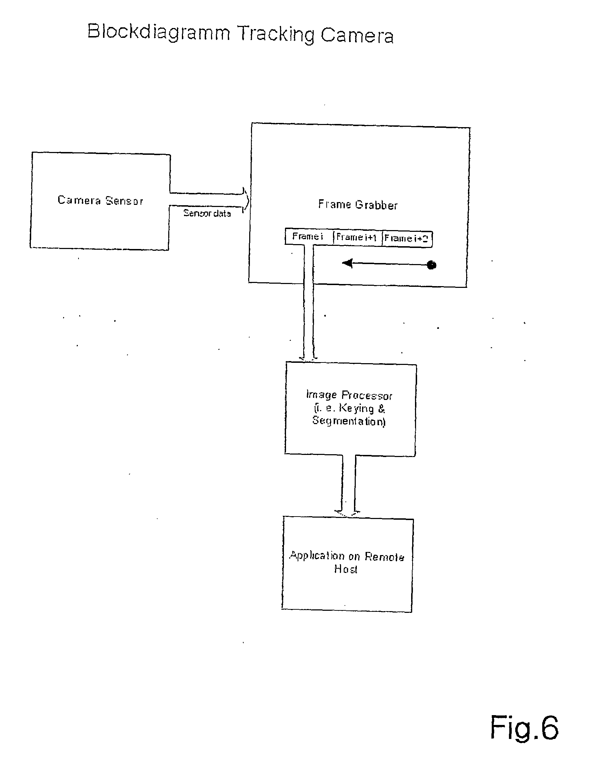

- Figur 6:: eine schematische Blockdarstellung der Komponenten einer Messkamera (Tracking-Kamera);

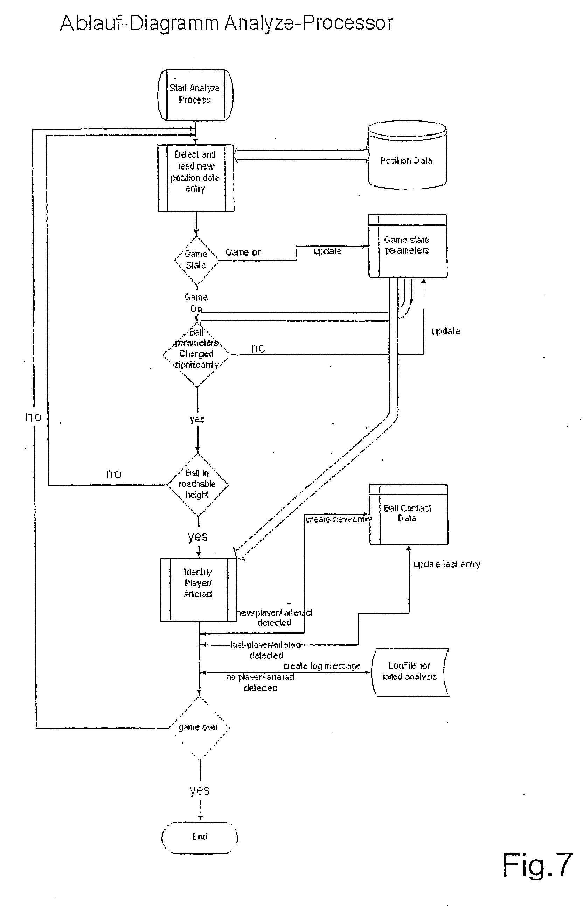

- Figur 7:: ein Flussdiagramm zur Darstellung der Arbeitsweise des Analyse-Moduls bzw. von dessen Analyse-Prozessor
- Figur 8:: eine einfache Repräsentation einer Spielsituation, in der die Spieler durch Punkte dargestellt sind. Diese Repräsentation ist dynamisch, d.h. die die Spieler repräsentierenden Punkte bewegen sich;
- Figur 9:: eine einfache Repräsentation einer Spielsituation ähnlich der aus Figur 8, bei der zu jedem Punkt ähnlich einem Schweif auch die Punkte zu vorangegangen Zeitpunkten zunehmend verblassend dargestellt sind; und
- Figur 10:: eine einfache Repräsentation einer Spielsituation, die bereits auf einer strategischen, auf Regeln basierten Analyse der Spielsituation beruht.

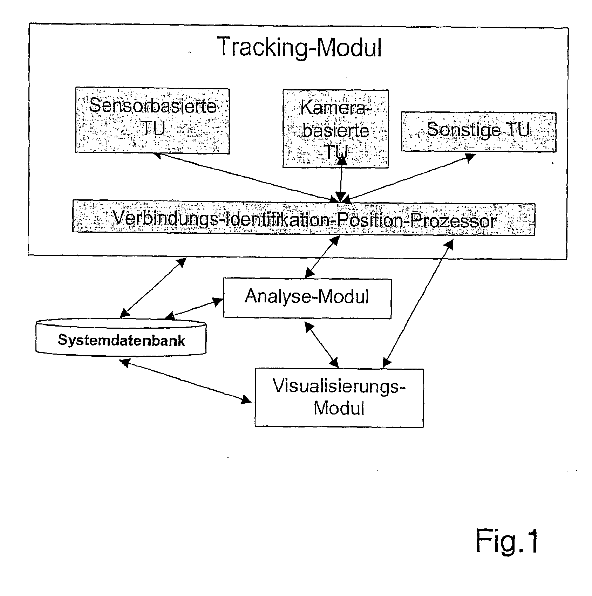

Figur 1 zeigt ersten Überblick einer bevorzugten Ausführung des Tracking-Moduls. Das Tracking-Modul beinhaltet mehrere Tracking-Units (TU). Im Beispiel ist eine sensorbasierte Tracking-Unit und eine kamerabasierte Tracking-Unit vorgesehen. Zusätzlich können weitere Tracking-Units vorgesehen sein, weshalb im Blockdiagramm ein Platzhalter für weitere Tracking-Units ("sonstige TU") zu sehen ist.

Alle Tracking-Units sind, bevorzugt bidirektional, mit dem Verbindungs-Identifikation-Position-Prozessor (VIPP) verbunden. Dieser VIPP beinhaltet die zentrale Positionsdatenverarbeitungseinheit, die die von den Objekterfassungseinheiten der einzelnen Tracking-Units erhaltenen Datensätze realen Objekten zuordnet.

Das Tracking-Modul ist mit dem Analyse-Modul, dem Visualisierungs-Modul und der Systemdatenbank verbunden. Die Systemdatenbank ist außerdem auch mit dem Analyse-Modul und dem Visualisierungsmodul verbunden, um sämtliche während der Erfassung erstellten Datensätze zu speichern und auf Anforderung den Systemkomponenten zur Verfügung zu stellen.

Das Analyse-Modul kommuniziert, wiederum bevorzugt bidirektional, mit dem Visualisierungs-Modul und dem Verbindungs-Identifikation-Positions-Prozessor. Das Visualisierungs-Modul übernimmt die Aufgaben der datentechnischen Reproduktion und Darstellung von Spielszenen oder sonstigen Informationsanzeigen. Die vom Visualisierungs-Modul erzeugten Reproduktionen von Spielszenen können dem optischen Eindruck der von einer virtuellen Kamera von einem frei wählbaren, beweglichen Standpunkt aus aufgenommenen Spielszene entsprechen. Obwohl also nur eine feste Anzahl wirklicher Kameras vorhanden ist, können jederzeit Bilder für eine beliebige Betrachterposition berechnet und dargestellt werden. Dabei ist es möglich, eine Spielszene aus der Sicht eines bestimmten Spielers, etwa des Torwartes auf den sich nähernden Ball, des Schiedsrichters oder eines seiner Assistenten oder aus Sicht des Balles selbst zu betrachten. Für spieltaktische Analysen besonders interessant ist die Möglichkeit, eine Draufsicht des Spieles zu erstellen, anhand derer sich die Positionierung jedes Spielers etwa bei der Raumdeckung kontrollieren lässt.

Das Visualisierungs-Modul kann mit einer in der Abbildung nicht dargestellten Sendeeinrichtung für Videobilder verbunden sein, damit die vom Visualisierungs-Modul erstellten Bilder (und ggf. Töne) in eine Übertragung oder Aufzeichnung eines Fußballspiels einbezogen werden können.

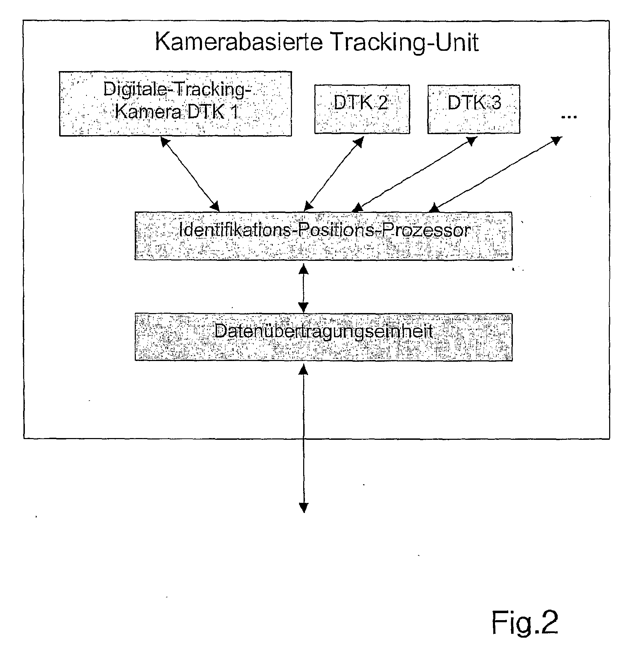

Figur 2 zeigt ein Blockdiagramm einer kamerabasierten Tracking-Unit. Die Tracking-Unit verfügt über mehrere Untereinheiten, die jeweils eine digitale Tracking-Kamera (DTK) enthalten. Im Blockdiagramm sind davon drei dargestellt. Die Tracking-Kameras sind mit dem Identifikations-Positions-Prozessor verbunden, der die Objekterfassungszentrale der kamerabasierten Tracking-Unit enthält. Zusätzlich enthält jede DTK bevorzugt eine eigene Objekterfassungseinheit, die im Blockdiagramm nicht eigens dargestellt ist. Die Objekterfassungseinheiten sind dazu ausgebildet, verschiedene Keying-Verfahren auf die von der jeweiligen DTK erfassten Bilddaten anzuwenden, so dass bereits für die Isolation der erfassten Objekte verwendbare Bilddaten an den Eingängen des Identifikations-Positions-Prozessor zur Verfügung stehen und dieser rechentechnisch entlastet wird.

Der Identifikations-Positions-Prozessor ist mit der Datenübertragungseinheit der Tracking-Unit verbunden, die bidirektional mit der zentralen Positionsdatenverarbeitungseinheit kommuniziert. Da die einzelnen DTKs an unterschiedlichen Orten um und über das Spielfeld verteilt sind, enthält auch jede DTK eine Datenübertragungseinheit, über die sie mit dem Identifikations-Positions-Prozessor verbunden ist.

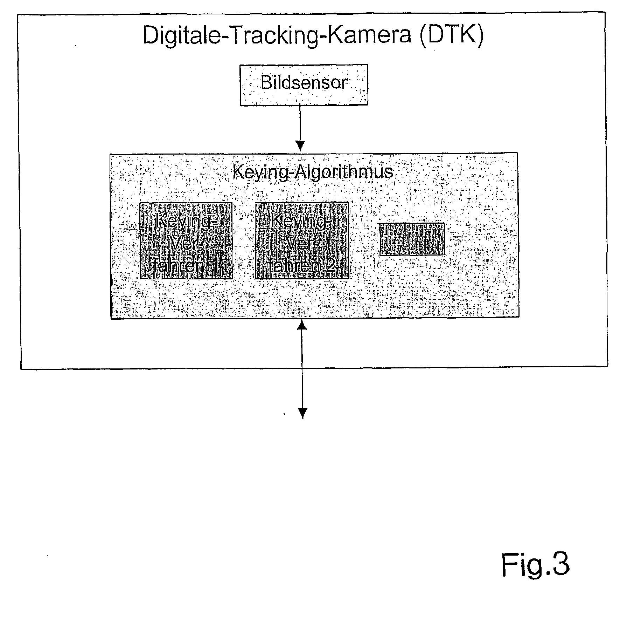

Figur 3 zeigt ein vereinfachtes Blockdiagramm einer digitalen Tracking-Kamera (DTK). Die optischen und elektronischen Komponenten zur Bilderzeugung wurden in dem Blockdiagramm in einem "Bildsensor" benannten Block zusammengefasst. Grundsätzlich ist dieser Teil der DTK nach im Stand der Technik bekannter Art aufgebaut. Die vom Bildsensor erzeugten Bilder werden unidirektional an die Objekterfassungseinheit der DTK gegeben. Diese ist dazu ausgebildet, die bereits genannten Keying-Verfahren auf die Bilddaten anzuwenden und die Zwischenergebnisdaten an die Objekterfassungszentrale bzw. die zentrale Positionsdatenverarbeitungseinheit zu übertragen. Der Fachmann wird bei seinem Systemaufbau abwägen, welche Verarbeitungsschritte dabei von der Objekterfassungseinheit der DTK und welche von der Objekterfassungszentrale ausgeführt werden sollen. Wichtige Gesichtspunkte für die Entscheidung sind eine möglichst gleichmäßige Auslastung der unterschiedlichen Datenverarbeitungseinheiten und eine möglichst geringe notwendige Bandbreite für die Übertragung der Zwischenergebnisdaten zwischen den einzelnen Verarbeitungseinheiten.

Zur Erfassung aller Objektbewegungen auf einem Spielfeld werden mindestens vier digitale und intern kalibrierte Messkameras als Tracking-Kameras eingesetzt. Diese werden derart um das gesamte Areal herum positioniert, dass insgesamt jede Position auf dem Spielfeld von mindestens zwei Messkameras registriert werden kann. Die Kameras sind jeweils mit einem miniaturisierten Rechner ausgestattet, der die Kamerabilder in seinem Arbeitsspeicher auswertet (Extraktion aller Objektumrisse) und lediglich die Bildposition - jeweils repräsentiert durch den Schwerpunkt oder den Fußpunkt der per Keying-Verfahren ermittelten Objekt-Flächen - aller extrahierten Objekte zur Weiterverarbeitung über ein Standard-Netzwerk an einen zentralen Position Data Processor (zentrale Positionsdatenverarbeitungseinheit) sendet. Im konkreten Ausführungsbeispiel werden die Kamerabilder zu keinem Zeitpunkt permanent gespeichert. Vielmehr werden jeweils sofort die Objekte per Umriss-Extraktion, d.h. durch ein Keying-Verfahren extrahiert und die zugehörigen Positionsdaten - vorzugsweise der Koordinaten von Fuß- oder Schwerpunkt eines isolierten zweidimensionalen Objektes - im jeweils zweidimensionalen Bildraum jeder Kamera ermittelt. Die Kameras können deshalb als reine Tracking-Kameras angesehen werden. In einer alternativen Ausführung kann jedoch auch die Speicherung der Kamerabilder zur späteren Begutachtung vorgesehen sein. Aufgrund der Echtzeitfunktionalität des Systems ist eine Speicherung jedoch für Analyse und Visualisierung nicht erforderlich.

Zur Gewinnung optimaler Keying-Ergebnisse kann zwischen vier, dem Fachmann grundsätzlich bekannten Umriss-Extraktions- bzw. Keying-Verfahren ausgewählt werden, nämlich Chroma-Key, Differenz-Key, Luminanz-Key oder Kantendetektion.

Die Tracking-Kameras sind für jede Messkampagne in ihrer Position und Orientierung bezüglich eines Weltkoordinatensystems (globales Koordinatensystem) zu bestimmen. Damit können einerseits alle - in möglichst kurzen Zeitabständen - synchronisiert von den Tracking-Kameras über Netzwerk gesendeten Bildkoordinaten (lokale Positionsdaten) im Position Data Processor (zentrale Positionsdatenerfassungseinheit) zu Objekt-Positionen in diesem Weltkoordinatensystem transformiert werden, d.h. zu globalen Positionsdaten. Andererseits garantiert der Bezug auf ein Weltkoordinatensystem die Möglichkeit zur Auswertung metrischer Bewegungseigenschaften (z. B. Distanzen, Geschwindigkeiten).

Die zentrale Positionsdatenerfassungseinheit (Position Data Processor) erhält in kurzen Zeitabständen (im Ausführungsbeispiel mit einer Wiederholrate von mindestens 12 Hz, bevorzugt 25 Hz) synchronisiert von allen Tracking-Kameras die Bildkoordinaten der jeweils registrierten Objekte in Form von lokalen Positionsdatensätzen einschließlich zugehöriger lokaler Objektkennung. Hieraus berechnet die zentrale Positionsdatenerfassungseinheit für alle Objekte deren Raumpositionen. Dazu übernimmt ein Object Identification Processor diese Positionsdaten und führt eine Identifikation der Objekte - einschließlich einer Zuordnung der jeweiligen lokalen Objektkennungen zu der entsprechenden globalen Objektkennung - basierend auf den in den unmittelbar vorangegangenen Tracking-Zyklen gewonnenen Ergebnissen durch. Die Positions- und Identitätsdaten (entsprechend den globalen Positionsdatensätzen nebst jeweils zugehöriger globaler Objektkennung als Identifikationsinformation) werden permanent auf einem Display angezeigt, damit eine überwachende Person als Operator oder Identification Supervisor eventuell manuelle Korrekturen vornehmen kann. Sollte es zu Verdeckungen o. ä. kommen, muss der Operator eingreifen und die Zuordnung manuell vornehmen. Dabei wird er durch Systemfunktionen (z. B. Preselektion aufgrund räumlicher Nähe) möglichst weitgehend unterstützt.

Die Positions- und Identitätsdaten (Positionsdatensätze und Objektkennungen) werden im Takt des Tracking-Systems über Standard-Netzwerk an das Analyse-Modul transferiert. Dort werden diese Daten sowohl in Datenstrukturen als auch auf Massenspeicher akkumuliert. Simultan dazu wertet ein regelbasierter Analyse-Prozessor des Analyse-Moduls die in Form von globalen Positionsdatensätzen und jeweils zugehöriger Objektkennung vorliegenden Positions- und Identitätsdaten aus, sobald jeweils ein neuer Eintrag in der Positionsdatenbank erfolgt ist, und baut eine Datenstruktur "Ballkontakte" auf, die beschreibt, wer wann wo im Ballbesitz gewesen ist. Durch die Modellierung "künstlicher" Ballbesitzer wie Tor, Torpfosten, Torauslinie, etc. können alle relevanten Spielereignisse erfasst und in einer einheitlichen Form abgelegt werden. Die zur Analyse verwendeten Regeln basieren auf der korrelierten Abfrage der Ball- und Spielerpositionen und ihrer Veränderung im Vergleich zu den vorangegangenen Zyklen. Zudem ist eine wissensbasierte Analyse aufgrund von Regeln vorgesehen, die Spieltheorie und Wahrscheinlichkeiten für bestimmte Spielereignisse und Verläufe aufgrund von zuvor erfassten oder eingegebenen Sollzuständen und Erfahrungswerten berücksichtigt. Die automatisch analysierten Ballkontakte werden einer der Analyse-Überwachung dienenden Person (Analyse-Supervisor) auf einem Display angezeigt. Durch vom System bereitgestellte geeignete Interaktionsmittel kann der Analyse-Supervisor falsche Interpretationen korrigieren.

Die Datenstruktur Ballkontakte besteht aus einer Liste von Datensätzen, die jeweils mit ihren benachbarten Datensätzen verknüpft sind. Die einzelnen Datensätze enthalten folgende Elemente:

| | | | | | | | |
|---|---|---|---|---|---|---|---|
| Player ID | TimeStamp 1 (Start of Ball Posession) | TimeStamp 2 (End of Ball Posession) | Player Position at TimeStamp 1 | Player Position at TimeStamp 2 | Game Status Flag | | |

Der Analyse Prozessor erhält vom Betriebssystem bei Eintrag eines neuen Datensatzes in die Positionsdatenbank die Kontrolle über die Programmausführung, worauf dieser die veränderte Spielsituation sofort auswerten kann (siehe Flussdiagramm). Da der Analyse-Prozessor regelbasiert ist, operiert er auf Basis eines zuvor gespeicherten Satzes von Analyse-Regeln, die die Verarbeitung der Positions- und Identifikationsdaten durch den Analyse-Prozessor vorgeben.

Zur Anwendung der Analyse-Regeln ist es notwendig, den Zustand des Spiels und insbesondere des Balls mittels einer Game State Data Structure programmgesteuert zu beschreiben. Diese Datenstruktur hat folgende Einträge:

| | | | | |
|---|---|---|---|---|
| Player ID of last ball posession | Ball posession state (yes \| no ) | Game state (active \| not active) | Current 3D-Vector of ball movement | Current speed of ball movement |

Folgende Regeln werden zur Ballbesitz-Analyse kanonisch angewendet:

Ist das Spiel unterbrochen? wenn nein ->
Haben sich Ball-Bewegungsvektor oder Ball-Geschwindigkeit signifikant verändert? Wenn ja ->
   Befindet sich der Ball in einer für einen Spieler erreichbaren oder für ein Artefakt zutreffenden Höhe? wenn ja,
      Welcher Spieler oder welches Artefakt ist dem Ball am nächsten, wobei ein festgelegter Maximalabstand ("Mindestnähe") eingehalten sein muss? Wenn gefunden ->
         Ist dieser Spieler oder dieses Artefakt bereits im Ballbesitz gewesen?

Folgende besondere Operationen der Analyse-Logik (d.h. des Analyse-Prozessors) sind in den unten aufgeführten Situationen durchzuführen:

Ist das Spiel unterbrochen, ist die Game State Data Structure wie folgt zu setzen:

| | | | | |
|---|---|---|---|---|
| Player ID of last ball posession = NONE | Ball posession state (yes \| no ) = NO | Game state (active \| not active) = NOT ACTIVE | Current 3D-Vector of ball movement = actual value, if available, undefined other-wise | Current speed of ball movement = actual value, if available, undefined otherwise |

Ist der aktuell erkannte ballführende Spieler identisch mit dem zuletzt registrierten ballführenden Spieler, so wird kein neuer Datensatz in die Ballkontakt-Datenstruktur eingetragen, sondern das "TimeStamp 2"- Element und das entsprechende "Player-Position"-Element des letzten Eintrages aktualisiert. Entsprechende Berechnungen werden ebenfalls für möglichen Ballkontakte durchgeführt und daraus taktische Varianten berechnet.

Auf der Basis der somit erzeugten Datenstrukturen für zeitbezogene Positions- und Identifikationsdaten einerseits und für zeitbezogene Ballkontakt-Informationen andererseits werden Berechnungen von einfachen Statistiken bis hin zu komplexen Analysen auf spieltheoretischer Basis durchgeführt:

Die Datenstruktur für zeitbezogene Positions- und Identifikationsdaten dient dabei als Grundlage für die Berechnung des "Spiels ohne Ball", sowohl respektiv als auch antizipatorisch. Gegenstand der Analyse sind in aufsteigender Komplexität beispielsweise:
- Laufwege, Geschwindigkeit, Beschleunigung eines Spielers
- Aufenthaltsräume und Aktionsradien eines Spielers und der Mannschaft
- Formationsspiel der Mannschaften
- Raumdeckung
- Kombinatorik

Die Datenstruktur für zeitbezogene Ballkontakt-Daten dient entsprechend als Grundlage für die Berechnung des "Spiels mit dem Ball". Gegenstand der Analyse sind in aufsteigender Komplexität beispielsweise:
- Anzahl und Typ der Fehlpässe (im Kurzpassspiel oder bei "langen Bällen", im Angriff, Mittelfeld oder in der Abwehr)
- bevorzugte Anspielstationen und Doppelpass-Spieler
- Anteil von Lang- und Kurzpassspiel
- Passschärfe
- Zweikampfverhalten eines Spielers
- Zeitdauer und Raumgewinn einer Ballstafette
- Spielfluss, Angaben über zusammenhängende Spielzüge

Die kombinierte Auswertung beider Datenstrukturen wird bei der Analyse von Angriffs- und Torschuss-Szenarien sowie von Konter-Situationen eingesetzt. Eingang finden diese Datenstrukturen ebenfalls in der Berechnung des taktischen Mannschaftsspiels und dessen Veränderung im Verlauf des Spiels.

Durch eine zeitliche Parametrisierung der Sollzustände eines Spiels ist es möglich, erkannte Spielsituationen in die unmittelbare Zukunft zu extrapolieren und damit erfolgsversprechende Spielzüge zu antizipieren. Diese Funktionalität lässt sich sowohl im Training offline als auch während eines Spiels online (in Echtzeit) einsetzen.

Gegenstand der Spielantizipation sind in aufsteigender Komplexität beispielsweise:
- Optimale Anspielstation und Ballstafette
- Kontergefahr bzw. -möglichkeit
- Torgefahr bzw. Erzielen eines Tores
- Unterbinden eines Angriffs
- Abseitsfalle

Außerdem werden die formations- und mannschaftsbezogenen Analysen mit entsprechenden Sollzuständen - durch Algorithmen berechnet oder explizit dargestellt - der jeweiligen Spielsituationen verglichen, woraus sich die tatsächliche Umsetzung einer Taktik aus der Spieltheorie bestimmen lässt.

Zur weiteren Auswertung der Positions- und Identitätsdaten sowie der aus ihnen abgeleiteten Ballkontakte ist ein Visualisierungs-Modul vorgesehen. Dieses weist eine Visualisierungseinheit auf, über die das Visualisierungs-Modul jederzeit auf die betreffenden Datenstrukturen zugreifen kann. Eine zu Spielbeginn initialisierte und während des Spiels eventuell aktualisierte Team Formation Database steht ebenfalls für die Auswertung strukturierend zur Verfügung.

Ein Visualisation Processor des Visualisierungs-Moduls führt die Analyse-Berechnungen und Animationsbefehle durch, die über ein sehr flexibles und schnell zu bedienendes Tool spezifiziert werden: Ein Analyse- und Visualisierungsgraph, der es ermöglicht, durch den Aufbau eines Netzes von Datenverarbeitungsknoten die Art und Reihenfolge der gewünschten Berechnungs- und Darstellungsoperationen festzulegen.

Knoten sind dadurch charakterisiert, dass sie die an ihrem "Eingang" anliegenden Daten entsprechend ihrer Aufgabe verarbeiten und die Ergebnisse an ihrem "Ausgang" dem nächsten Koten bereitstellen. So erwartet z. B. der Knoten "bevorzugte Anspielstationen" als Eingabe den Namen eines Spielers und das auszuwertende Zeitintervall. Das Ergebnis, eine Rangliste mit Namen und getätigten Zuspielen, kann einem numerischen Filter als Eingangsdatum dienen, der festlegt, wieviele Spieler der Liste für die Graphikausgabe berücksichtigt werden sollen. Die dadurch festgelegten Analysedaten können einem weiteren Graphic-Charts-Filter zugeführt werden, der festlegt, in welcher Form die Statistik angezeigt werden soll (Balken Charts, Pie Charts, etc). Eine Visualisierung kann auch auf Basis anderer, beispielsweise herkömmlicher linearer, Algorithmen erfolgen.

In komplexeren dynamischen Visualisierungen können z. B. die Geschwindigkeiten von Spielern berechnet werden. Dazu wird der Knoten zur Geschwindigkeitsberechnung aktiviert und auf der Eingangsseite mit den Daten zu Spieler-IDs und auszuwertendem Zeitintervall gespeist.

Die Erfindung ist weiterhin dadurch gekennzeichnet, dass sowohl die aus der Objektverfolgung gewonnenen Bewegungsdaten als auch die durch deren Analyse abgeleiteten Statistik- und Strukturdaten mittels einer Echtzeit-Visualisierungskomponente sofort in dynamischen Grafiken dargestellt werden. Somit wird im Fall der Anwendung des Systems mit einer Mannschaftssportart neben der reinen Darstellung der Raumpositionen der Spieler auch die aussagekräftige Visualisierung des unmittelbaren Spieles "am Ball" und des taktischen Mannschaftsspieles erreicht. Außerdem werden durch die Echtzeit-Animation auf der Basis von Analyseergebnissen der Prädiktion sich anbahnende Spielsituationen intuitiv und dramaturgisch ansprechend umgesetzt.

Die Visualisierungskomponente stellt sowohl für die integrierende Darstellung von Analyse-Ergebnissen und Video- Bildern als auch für die alleinige Anwendung des Visualisierungsmoduls Kontrollmöglichkeiten für die hierarchische Anordnung der einzelnen Bildquellen bzw. der erzeugten Grafikelemente bzgl. Vorder- und Hintergrund bereit. Diese sind ebenfalls als Operationen (repräsentiert durch Knoten) im Visualisierungsgraphen realisiert.

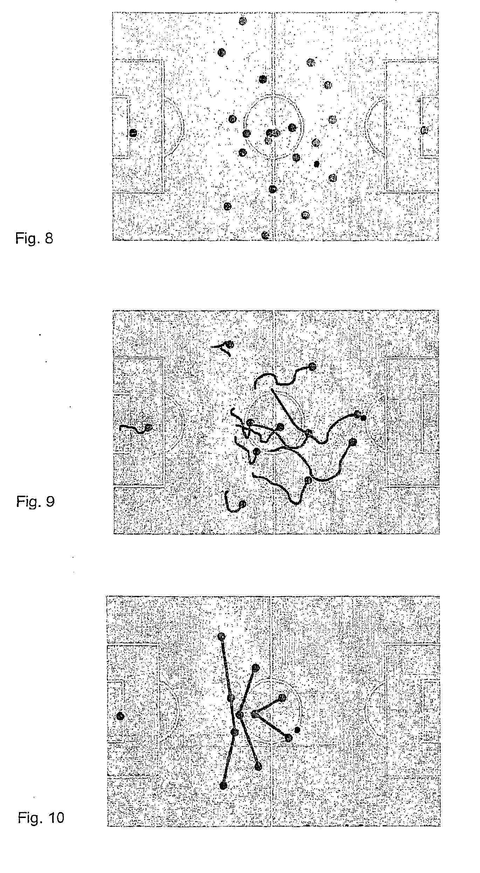

Die aus der Auswertung durch das Visualisierungs-Modul resultierende Statistikgrafik oder Analyse-Animation kann lokal an einem Display angezeigt werden und/oder in einem festgelegten Protokoll über Netzwerk an einen entfernten Display-Server übertragen werden, der die Animation in ein Video-Signal transformiert. Beispiele für von dem Visualisierungs-Modul erzeugte graphische Repräsentationen eines Spielverlaufs sind in den Figuren 8 bis 10 dargestellt.

Zur Integration der Visualisierungen der Analyse-Ergebnisse in eine TV-Live-Übertragung oder sonstige Video- oder Printbilder werden die beiden Bildsequenzen - nämlich die eigentliche Videoaufnahme und die von dem Visualisierungsmodul erzeugte - geometrisch und zeitlich synchronisiert. Die geometrische und zeitliche Synchronisation wird auch für zu einem späteren Zeitpunkt abgerufene Bildsequenzen durchgeführt.

Zur geometrischen Synchronisierung sind sowohl die inneren Abbildungsparameter der Video-Kamera (Bildmittelpunkt und horizontaler Skalierungsfaktor in Abhängigkeit der Brennweite) als auch Lage und Referenz-Orientierung in einem Weltkoordinatensystem zu bestimmen. Bei analogen Video-Kameras ist für diesen Schritt eine Digitalisierung der Bildsequenzen notwendig. Neben der Kalibrierung selbst sind auch die dafür verwendeten Passpunkte des Spielfeldes analog zu denen des oben beschriebenen Tracking-Verfahrens, wodurch ein einheitliches Weltkoordinatensystem benutzt werden kann.

Zur zeitlichen Synchronisierung werden die Timecode-Registrierung der Video-Kamera und die Zeiterfasssung des Tracking-/Analyse-Systems zu Spielbeginn abgeglichen oder es wird alternativ ein zentraler Taktgeber vorgesehen, der allen Kameras denselben Timecode vorgibt. Zur Integration der Analyse-Visualisierungen mit Bildsequenzen von nicht-statischen, schwenkbaren Kameras wird zusätzlich die Orientierung (Schwenk- und Neigungswinkel) dieser Kameras in ihrer zeitlichen Veränderung erfasst und dem Visualisierungs-Modul zur Verfügung gestellt. Damit kann das Visualisierungs-Modul die Analyse-Ergebnisse zu jedem Zeitpunkt in der Perspektive der Video-Kamera berechnen und einer Einheit zur Integration der Bildsequenzen zeitsynchron einspeisen.

## Patentansprüche

1. Situationsanalysesystem zum Erfassen und Verfolgen von sich bewegenden Objekten innerhalb eines begrenzten Raumes über einen vorzugebenden Zeitraum und zum Analysieren von Objektkonstellationen und zeitlichen Episoden sowie Situationen während des Zeitraums
mit mehreren Tracking-Units,
welche jeweils wenigstens eine Untereinheit in Form einer Kamera aufweisen, die derart angeordnet und ausgerichtet ist, dass sie den begrenzten Raum und die darin befindlichen sich bewegenden und ortsfesten Objekte erfassen kann, wobei die Kameras jeweils ein Objektiv und einen Bilderfassungs -Sensor enthalten,
und einer zentralen Positionsdatenverarbeitungseinheit,
die ausgebildet ist, zu einem jeweiligen realen Objekt eine globale Position des jeweiligen realen Objektes im erfassten Raum zu bestimmen und für jedes reale Objekt einen globale Objektkennung und einen zugehörigen, zeitabhängigen globalen Positionsdatensatz zu erzeugen,
wobei die Kameras der Tracking Units jeweils eine Framegrabber-Einheit und eine Objekterkennungseinheit enthalten, von denen die Objekterkennungseinheit ausgebildet ist, in von dem Bilderfassungssensor erfassten und der Framegrabber-Einheit vorverarbeiteten Bildern einzelne Objekte zu isolieren, und
jede Tracking-Unit über wenigstens eine Datenübertragungseinheit verfügt, über die jede Tracking-Unit mit der zentralen Positionsdatenverarbeitungseinheit verbunden ist und die dazu ausgebildet ist, eine bidirektionale Kommunikation zu erlauben, so dass jede Tracking-Unit Daten an die zentrale Positionsdatenverarbeitungseinheit übermitteln kann, **dadurch gekennzeichnet, dass** die zentrale Positionsdatenverarbeitungseinheit über einen Rückkanal an jede Tracking-Unit einzeln oder mehrere Tracking-Units gleichzeitig Daten zur Steuerung des Erfassungsverhaltens der Tracking-Units übertragen kann.

2. Situationsanalysesystem nach Anspruch 1, **dadurch gekennzeichnet,**
**dass** wenigstens eine Tracking-Unit des Situationsanalysesystems über wenigstens einen an einem der zu erfassenden Objekte platzierten Sensor verfügt und dazu ausgebildet ist, die Position des mit dem Sensor versehenen Objektes mittels Sonarwellen oder elektromagnetischen Signalen zu bestimmen.

3. Situationsanalysesystem nach einem der Ansprüche 1 oder 2, **dadurch gekennzeichnet,**
**dass** wenigstens eine Tracking-Unit des Situationsanalysesystems wenigstens zwei Untereinheiten mit jeweils einer Messkamera aufweist, wobei die Messkameras der Untereinheiten der Tracking-Unit derart angeordnet und ausgerichtet sind, dass sie den begrenzten Raum und die darin befindlichen sich bewegenden und ortsfesten Objekte aus unterschiedlichen Perspektiven erfassen können und jeweils ein Objektiv, einen Bildsensor, eine Framegrabbereinheit und eine Bildverarbeitungseinheit umfassen, welche so angeordnet und ausgebildet sind, dass das jeweilige Objektiv ein zweidimensionales Abbild des erfassten Raumes und der Objekte auf einen jeweiligen Bildsensor projiziert, der seinerseits mit einer jeweiligen Framegrabber-Einheit zur Vorverarbeitung des vom Bildsensor erfassten Bildes verbunden ist, wobei die Bildverarbeitungseinheit Bilddaten von der Framegrabber-Einheit übernimmt.

4. Situationsanalysesystem nach Anspruch 1 oder 3, **dadurch gekennzeichnet,**
**dass** die Objekterfassungseinheit dazu ausgebildet ist, einzelne Objekte mittels eines Keving-Verfahrens wie Chroma-Key, Differenz-Key, Luminanz-Key oder Kantendetektion zu isolieren und gemäß über den Rückkanal veränderlich vorgebbaren Kriterien ein Keying-Verfahren oder mehrere Keying-Verfahren gleichzeitig auf die erfassten Bilddaten anzuwenden.

5. Situationsanalysesystem nach Anspruch 3 oder Anspruch 4 mit Anspruch 3, **dadurch gekennzeichnet,**
**dass** jede Messkamera über einen Pufferspeicher verfügt, der dazu ausgebildet ist, eine Mehrzahl der zu jedem Zeitpunkt des Betriebes zuletzt von der Messkamera aufgenommenen Bilder zu speichern.

6. Situationsanalysesystem nach Anspruch 5, **dadurch gekennzeichnet,**
**dass** jede Messkamera dazu ausgebildet ist, Bilder in einer ersten, hohen Bildauflösung zu gewinnen und in ihrem Pufferspeicher zu speichern,
und **dass** die Bildverarbeitungseinheit jeder Messkamera dazu ausgebildet ist, aus den gewonnenen Bildern fortlaufend durch Anwendung eines Skalierungsverfahrens Bilder einer zweiten, reduzierten Auflösung zu berechnen und über die Datenübertragungseinheit der Messkamera an die zentrale Positionsdatenverarbeitungseinheit zu übermitteln sowie auf Anforderung der zentralen Positionsdatenverarbeitungseinheit wenigstens eines der im Pufferspeicher gespeicherten Bilder der ersten, hohen Auflösung an die zentrale Positionsdatenverarbeitungseinheit zu übermitteln.

7. Situationsanalysesystem nach einem der Ansprüche 3, 4 mit 3, 5 oder 6, **dadurch gekennzeichnet,**
**dass** mindestens eine Objekterfassungseinheit einer Tracking-Unit dazu ausgebildet ist, in dem jeweiligen erfassten zweidimensionalen Abbild einzelne Objekte und Ihre Position innerhalb des zweidimensionalen Abbildes zu erfassen und für jedes erfasste Objekt zur jeweiligen Zeit einen kameraspezifischen Positionsdatensatz mit einer eindeutigen Identifikationskennung zu erzeugen, die während eines Spieles nur ein einziges Mal vergeben wird, und den Positionsdatensatz an die zentrale Positionsdatenverarbeitungseinheit zu übertragen, wobei der kameraspezifische Positionsdatensatz für jedes Objekt eine individuelle Objektkennung sowie die diesem Objekt zum jeweiligen Zeitpunkt zugeordneten, kameraspezifischen Positionsdaten erhält,
und **dass** die zentrale Positionsdatenverarbeitungseinheit ausgebildet ist, die jeweiligen, von den einzelnen Messkameras stammenden Objektkennungen einander so zuzuordnen, dass alle Objektkennungen zu jeweils einem realen Objekt einander zugeordnet sind, und die globale Position des jeweiligen realen Objektes im erfassten Raum aus den kameraspezifischen Positionsdaten der kameraspezifischen Positionsdatensätze zu bestimmen und für jedes reale Objekt eine globale Objektkennung und einen zugehörigen, zeitabhängigen globalen Positionsdatensatz zu erzeugen.

8. Situationsanalysesystem nach einem der vorhergehenden Ansprüche, **gekennzeichnet durch** ein Analysemodul,
welches auf Basis der von der zentralen Positionsdatenverarbeitungseinheit erzeugten globalen Positionsdatensätze eine Datenstruktur erzeugt, die Zeit- und Positionsdaten enthält, welche diejenigen Zeiträume und Orte kennzeichnen, zu denen einzelne der erfassten Objekte eine gegenüber vorgebbaren Schwellwerten geringe räumliche und zeitliche Entfernung zueinander aufweisen, wobei das Analyse-Modul ausgebildet ist, die große Nähe **durch** Vergleich eines als Schwellwert vorzugebenden und gespeicherten Abstandswertes mit dem sich aus den Positionsdaten zu den einzelnen Objekten ergebenden Abständen der Objekte voneinander zeitabhängig zu ermitteln.

9. Situationsanalysesystem nach Anspruch 8, **dadurch gekennzeichnet,**
**dass** das Analyse-Modul ausgebildet ist, über den Rückkanal für jede Tracking-Unit Betriebsparameter vorzugeben, die die Position und die Größe eines in einer höheren Auflösung von der Tracking-Unit an das Analyse-Modul zu übertragenden Ausschnittes eines ebenfalls bezeichneten Bildes angeben und/oder Kriterien für die Durchführung eines Keying-Verfahrens oder einer Kombination von Keying-Verfahren betreffen können.

10. Situationsanalysesystem nach Anspruch 9, **dadurch gekennzeichnet, dass** das Analyse-Modul dazu ausgebildet ist, aufgrund des Vergleichs bereits erfasster Positionen von Objekten die Bewegungsrichtung und die Bewegungsgeschwindigkeit abzuleiten und aufgrund von spielbezogenen Regeln besondere Spielsituationen zu antizipieren und für die Erfassung dieser besonderen Spielsituationen bereits vor deren Eintreten über den Rückkanal für wenigstens eine Tracking-Unit angepasste Betriebsparameter vorzugeben.

11. Situationsanalysesystem nach einem der vorhergehenden Ansprüche, **gekennzeichnet durch** ein Visualisierungs-Modul, welches eine Visualisierungseinheit aufweist, die mit dem Analyse-Modul verbunden und ausgebildet ist, jederzeit auf die betreffenden Datenstrukturen zuzugreifen und aus diesen graphische, zeitabhängige, dynamische Repräsentationen der Objektpositionen und -konstellationen abzuleiten.

12. Situationsanalysesystem nach Anspruch 11, **dadurch gekennzeichnet,**
**dass** das Visualisierungs-Modul dazu ausgebildet ist, eine virtuelle graphische Repräsentation einer Ansicht des gesamten Spieles oder eines Teiles des Spieles aus einer beliebig wählbaren, insbesondere beweglichen, Perspektive datentechnisch zu berechnen und auszugeben.

## Claims

1. Situation analysis system for detecting and tracking moving objects within a limited space over a period to be prescribed, and for analysing object constellations and temporal episodes as well as situations during the period,
comprising a plurality of tracking units,
which respectively have at least one subunit in the form of a camera which is arranged and aligned in such a way that it can detect the limited space and the moving and stationary objects located therein, the cameras respectively including an objective and an image acquisition sensor,
and a central position data processing unit
which is designed to determine in relation to a respective real object a global position of the respective real object in the detected space, and to generate for each real object a global object identifier and an associated, time-dependent global position data set,
in which the cameras of the tracking units respectively include a frame grabber unit and an object detection unit, of which the object detection unit is designed to isolate individual objects acquired by the image acquisition sensor and preprocessed in the frame grabber unit, and
each tracking unit has at least one data transmission unit via which each tracking unit is connected to the central position data processing unit and which is designed to permit bidirectional communication so that each tracking unit can transmit data to the central position data processing unit,
**characterized in that** via a return channel the central position data processing unit can transmit data for controlling the acquisition behaviour of the tracking units to each tracking unit individually or to a plurality of tracking units simultaneously.

2. Situation analysis system according to Claim 1, **characterized in that**
at least one tracking unit of the situation analysis system has at least one sensor placed on one of the objects to be acquired, and is designed to determine the position of the object provided with the sensor by means of solar waves or electromagnetic signals.

3. Situation analysis system according to either of Claims 1 and 2, **characterized in that**
at least one tracking unit of the situation analysis system has at least two subunits respectively comprising a measuring camera, the measuring cameras of the subunits of the tracking unit being arranged and aligned in such a way that they can acquire the limited space and the moving and stationary objects located therein from different perspectives, and respectively comprising an objective, an image sensor, a frame grabber unit and an image processing unit which are arranged and designed so that the respective objective projects a two-dimensional image of the acquired space and of the objects onto a respective image sensor which, for its part, is connected to a respective frame grabber unit for preprocessing the image acquired by the image sensor, the image processing unit accepting image data from the frame grabber unit.

4. Situation analysis system according to either of Claims 1 and 3, **characterized in that**
the object detection unit is designed to isolate individual objects by means of a keying method such as chroma key, difference key, luminance key or edge detection and, in accordance with criteria which can be prescribed variably via the return channel, to apply a keying method or a plurality of keying methods simultaneously to the acquired image data.

5. Situation analysis system according to Claim 3 or Claim 4 with Claim 3, **characterized in that**
each measuring camera has a buffer memory which is designed to store a plurality of the images last recorded by the measuring camera at each instant of operation.

6. Situation analysis system according to Claim 5, **characterized in that**
each measuring camera is designed to obtain images in a first, high image resolution and to store them in its buffer memory, and **in that**
the image processing unit of each measuring camera is designed to calculate a second, reduced resolution continuously from the obtained images by applying a scaling method, and to transmit it to the central position data processing unit via the data transmission unit of the measuring camera as well as, upon request from the central position data processing unit, to transmit at least one of the images, stored in the buffer memory, of the first, high resolution to the central position data processing unit.

7. Situation analysis system according to one of Claims 3, 4 with 3, 5 or 6, **characterized in that**
at least one object detection unit of a tracking unit is designed to detect in the respective acquired two-dimensional image individual objects and their position within the two-dimensional image, and to generate for each detected object at the respective time a camera-specific position data set with a unique identifier which is awarded only a single time during a game, and to transmit the position data set to the central position data processing unit, the camera-specific position data set including for each object an individual object identifier and the camera-specific position data assigned to said object at the respective instant, and **in that**
the central position data processing unit is designed to assign the respective object identifiers originating from the individual measuring cameras to one another so that all the object identifiers respectively relating to a real object are assigned to one another, and to determine the global position of the respective real object in the acquired space from the camera-specific position data of the camera-specific position data sets, and to generate for each real object a global object identifier and an associated, time-dependent global position data set.

8. Situation analysis system according to one of the preceding claims, **characterized by** an analysis module
which on the basis of the global position data sets generated by the central position data processing unit, generates a data structure which includes time data and position data which mark those periods and locations in relation to which individual ones of the detected objects exhibit a slight spatial and temporal distance from one another in comparison to prescribable threshold values, the analysis module being designed to determine the close proximity as a function of time by comparing a stored distance value, which is to be prescribed as threshold value, with the distances of the objects resulting from the position data relating to the individual objects.

9. Situation analysis system according to Claim 8, **characterized in that** the analysis module is designed to prescribe via the return channel for each tracking unit operating parameters which are capable of specifying the position and the size of a section, transmitted from the tracking unit to the analysis module in a higher resolution, of a likewise designated image, and/or of relating to criteria for carrying out a keying method or a combination of keying methods.

10. Situation analysis system according to Claim 9, **characterized in that** the analysis module is designed to use the comparison of already acquired positions of objects to derive the direction of movement and the speed of movement, and to use game-related rules to anticipate particular game situations, and to prescribe operating parameters adapted for at least one tracking unit in order to detect said particular game situations even before their entry via the return channel.

11. Situation analysis system according to one of the preceding claims, **characterized by** a visualization module which has a visualization unit which is connected to the analysis module and is designed so as to access the relevant data structures at any time and to derive therefrom graphic, time-dependent, dynamic representations of the object positions and object constellations.

12. Situation analysis system according to Claim 11, **characterized in that**
the visualization module is designed to calculate and output a virtual graphic representation of a view of the entire game or a part of the game from a freely selectable, in particular movable perspective by using data technology.

## Revendications

1. Système d'analyse de situation pour détecter et suivre des objets mobiles à l'intérieur d'un espace délimité pendant une période à prédéfinir et pour analyser des constellations d'objets et des épisodes temporels ainsi que des situations pendant la période
comprenant plusieurs unités de poursuite,
lesquelles présentent respectivement au moins une sous-unité sous la forme d'une caméra, laquelle est disposée et orientée de telle sorte qu'elle peut couvrir l'espace délimité et détecter les objets mobiles et fixes qui s'y trouvent, les caméras contenant respectivement un objectif et un capteur d'acquisition d'image,
et une unité centrale de traitement de données de position,
laquelle est configurée pour, à propos d'un objet réel correspondant, déterminer une position globale de l'objet réel correspondant dans l'espace couvert et, pour chaque objet réel, générer un identifiant d'objet global et un jeu de données de position global associé dépendant du temps,
les caméras des unités de poursuite contenant respectivement une unité de capture de page-écran et une unité de reconnaissance d'objet, parmi lesquelles l'unité de reconnaissance d'objet est configurée pour isoler les objets individuels dans les images acquises par le capteur d'acquisition d'image et prétraitées par l'unité de capture de page-écran, et chaque unité de poursuite disposant d'au moins une unité de transmission de données, par le biais de laquelle chaque unité de poursuite est reliée avec l'unité centrale de traitement de données de position et qui est configurée pour permettre une communication bidirectionnelle, de sorte que chaque unité de poursuite puisse communiquer des données à l'unité centrale de traitement de données de position,
**caractérisé en ce que** l'unité centrale de traitement de données de position peut transmettre, par le biais d'un canal de retour, à chaque unité de poursuite individuellement ou simultanément à plusieurs unités de poursuite, des données pour commander le régime d'acquisition de l'unité de poursuite.

2. Système d'analyse de situation selon la revendication 1, **caractérisé en ce qu'**au moins une unité de poursuite du système d'analyse de situation dispose d'au moins un capteur placé sur l'un des objets à détecter et est configurée pour déterminer la position de l'objet muni du capteur à l'aide d'ondes de sonar ou de signaux électromagnétiques.

3. Système d'analyse de situation selon l'une des revendications 1 ou 2, **caractérisé en ce qu'**au moins une unité de poursuite présente au moins deux sous-unités munies respectivement d'une caméra de mesure, les caméras de mesure des sous-unités de l'unité de poursuite étant disposées et orientées de telle sorte qu'elles peuvent couvrir l'espace délimité et détecter les objets mobiles et fixes qui s'y trouvent depuis différentes perspectives et comprennent respectivement un objectif, un capteur d'image, une unité de capture de page-écran et une unité de traitement d'image, lesquels sont disposés et configurés de telle sorte que l'objectif correspondant projette une représentation bidimensionnelle de l'espace couvert et des objets détectés sur un capteur d'image correspondant, lequel est de son côté relié avec une unité de capture de page-écran correspondante pour le prétraitement de l'image acquise par le capteur d'image, l'unité de traitement d'image prenant en charge les données d'image de l'unité de capture de page-écran.

4. Système d'analyse de situation selon la revendication 1 ou 3, **caractérisé en ce que** l'unité de reconnaissance d'objet est configurée pour isoler les objets individuels au moyen d'un procédé d'incrustation, comme l'incrustation de couleur, l'incrustation de différence, l'incrustation de luminance ou la détection des bords, et pour appliquer un procédé d'incrustation ou plusieurs procédés d'incrustation simultanément sur les données d'images acquises conformément à des critères pouvant être prédéfinis modifiables par le canal de retour.

5. Système d'analyse de situation selon la revendication 3 ou la revendication 4 avec la revendication 3, **caractérisé en ce que** chaque caméra de mesure dispose d'une mémoire tampon qui est configurée pour enregistrer une pluralité des images acquises en dernier par la caméra de mesure à chaque instant du fonctionnement.

6. Système d'analyse de situation selon la revendication 5, **caractérisé en ce que** chaque caméra de mesure est configurée pour acquérir des images dans une première résolution d'image élevée et les enregistrer dans sa mémoire tampon et **en ce que** l'unité de traitement d'image de chaque caméra de mesure est configurée pour calculer continuellement, à partir des images acquises, des images dans une deuxième résolution réduite en appliquant un procédé de mise à l'échelle et les communiquer par le biais de l'unité de transmission de données de la caméra de mesure à l'unité centrale de traitement de données de position, ainsi que pour, sur demande de l'unité centrale de traitement de données de position, communiquer à l'unité centrale de traitement de données de position au moins l'une des images dans la première résolution élevée enregistrées dans la mémoire tampon.

7. Système d'analyse de situation selon l'une des revendications 3, 4 avec 3, 5 ou 6, **caractérisé en ce**
**qu'**au moins une unité de reconnaissance d'objet d'une unité de poursuite est configurée pour détecter dans la représentation bidimensionnelle respective acquise les objets individuels ainsi que leur position à l'intérieur de la représentation bidimensionnelle et, pour chaque objet détecté, générer pour l'instant correspondant un jeu de données de position spécifique à la caméra avec un identifiant d'identification explicite, lequel n'est attribué qu'une seule fois pendant un jeu, et transmettre le jeu de données de position à l'unité centrale de traitement de données de position, le jeu de données de position spécifique à la caméra contenant pour chaque objet un identifiant d'objet individuel ainsi que les données de position spécifiques à la caméra associées à cet objet à l'instant correspondant, et en ce que l'unité centrale de traitement de données de position est configurée pour associer les uns aux autres les identifiants d'objet respectifs issus des caméras de mesure individuelles de telle sorte que tous les identifiants d'objet correspondant à un objet réel respectif sont associés mutuellement, et pour déterminer la position globale de l'objet réel correspondant dans l'espace couvert à partir des données de position spécifiques à la caméra des jeux de données de position spécifiques à la caméra et, pour chaque objet réel, générer un identifiant d'objet global ainsi qu'un jeu de données de position global associé dépendant du temps.

8. Système d'analyse de situation selon l'une des revendications précédentes, **caractérisé par** un module d'analyse qui, en se basant sur les jeux de données de position globaux générés par l'unité centrale de traitement de données de position, génère une structure de données qui contient des données de temps et de position, lesquelles caractérisent les périodes et les endroits auxquels certains des objets détectés présentent un espacement mutuel dans l'espace et dans le temps qui est faible par rapport à des valeurs de seuil pouvant être prédéfinies, le module d'analyse étant configuré pour déterminer en fonction du temps la grande proximité par une comparaison d'une valeur d'écart, à prédéfinir et à enregistrer en tant que valeur de seuil, avec les écarts des objets entre eux qui résultent des données de position associées aux objets individuels.

9. Système d'analyse de situation selon la revendication 8, **caractérisé en ce que** le module d'analyse est configuré pour prédéfinir, par le biais du canal de retour et pour chaque unité de poursuite, des paramètres de fonctionnement qui indiquent la position et la taille d'une portion d'une image également désignée à transmettre dans une résolution plus élevée de l'unité de poursuite au module d'analyse et/ou qui peuvent concerner des critères pour la mise en oeuvre d'un procédé d'incrustation ou d'une combinaison de procédés d'incrustation.

10. Système d'analyse de situation selon la revendication 9, **caractérisé en ce que** le module d'analyse est configuré pour, en se basant sur la comparaison des positions déjà détectées d'objets, dériver le sens de déplacement et la vitesse de déplacement et anticiper des situations de jeu particulières en se basant sur des règles en rapport avec le jeu et aussi pour prédéfinir des paramètres de fonctionnement adaptés pour au moins une unité de poursuite par le biais du canal de retour afin de détecter ces situations de jeu particulières déjà avant qu'elles se produisent.

11. Système d'analyse de situation selon l'une des revendications précédentes, **caractérisé par** un module de visualisation qui présente une unité de visualisation, laquelle est reliée avec le module d'analyse et configurée pour accéder à tout moment aux structures de données concernées et pour dériver à partir de celles-ci des représentations graphiques dynamiques dépendantes du temps des positions et des constellations d'objets.

12. Système d'analyse de situation selon la revendication 11, **caractérisé en ce que** le module de visualisation est configuré pour calculer informatiquement et délivrer une représentation graphique virtuelle d'une vue de l'ensemble du jeu ou d'une partie du jeu depuis une perspective pouvant être choisie librement, notamment mobile.
